# EUROPÄISCHE PATENTSCHRIFT

(11) **EP 1 277 540 B1**
(45) Veröffentlichungstag und Bekanntmachung des Hinweises auf die Patenterteilung: **23.05.2007**
(21) Anmeldenummer: 02014700.5
(22) Anmeldetag: 03.07.2002
(51) Int. Cl.: B23K 37/047, B62D 65/00, B23P 21/00

(54) **Bearbeitungsstation**
Machining station
Station d'usinage

(30) Priorität: 18.07.2001 AT 11192001
(43) Veröffentlichungstag der Anmeldung: 22.01.2003
(73) Patentinhaber: TMS Transport- und Montagesysteme GmbH, 4031 Linz (AT)
(72) Erfinder: Acikgöz, Mustafa, 4030 Linz (AT); Kreuzgruber, Dietrich, 4060 Leonding (AT); Kreiten, Ulrich, 94124 Büchlberg (DE)
(74) Vertreter: Weiss, Christian

(56) Entgegenhaltungen:
- FR-A- 2 714 628
- US-A- 4 751 995
- US-A- 4 893 398
- US-A- 5 044 541

## Beschreibung

Die vorliegende Erfindung betrifft eine Bearbeitungsstation, vorzugsweise eine Schweißstation, zum Fügen von Konstruktionen aus Blechen, vorzugsweise Fahrzeugkarosserien, bestehend aus zumindest einem Spannrahmen, sowie einem zugehörigen Verfahren zum Durchführen eines Typenwechsels in einer Bearbeitungsstation.

Es gibt eine Vielzahl von Bearbeitungsstationen bei denen die zu bearbeitenden Bauteile mittels Spannrahmen in die Bearbeitungsstation zugeführt und gehalten werden. Als Beispiele für solche Stationen, entsprechend den Oberbegriffen der Ansprüche 1 und 16, seien die EP 903 197 A1 oder EP 909 603 A1 genannt, bei denen bei einem Wechsel des zu bearbeitenden Bauteiles jeweils der ganze Spannrahmen ausgewechselt werden muss. Die Spannrahmen befinden sich dabei in speziellen Magazinen. Es müssen also eine Vielzahl von unterschiedlichen Spannrahmen vorgesehen werden, die in platzaufwendigen Magazinen bis zu ihrem Einsatz gespeichert werden müssen. Weiters erfordern diese Anlagen komplizierte Spannrahmenwechseleinrichtungen, um einen schnellen Spannrahmenwechsel durchführen zu können. Da sich die Typen der zu bearbeitenden Bauteile oft nur geringfügig ändern, sind die unterschiedlichen Spannrahmen oft sehr ähnlich aufgebaut und teilweise an den gleichen Stellen mit gleichen Vorrichtungen bestückt, wodurch viele Vorrichtungen mehrfach vorhanden sein müssen, obwohl immer nur ein kleiner Teil davon gleichzeitig zum Einsatz kommt. Alle diese genannten Nachteile wirken sich sehr negativ auf die Kosten und den benötigten Platzbedarf einer solchen Bearbeitungsstation aus.
Die DE 38 40 033 A1 zeigt eine Bearbeitungsstation mit einer reduzierten Anzahl von benötigten Spannrahmen. Hier wird ein Spanngrundrahmen mit Spann-, Schweiß- und Positioniermittel bestückt, während sich ein anderer Spannrahmen gerade in der Bearbeitungsstation im Einsatz befindet. Hier erspart man sich zwar die Spannrahmenmagazine, es müssen jedoch nach wie vor aufwendige Spannrahmenwechselmechanismen vorgesehen werden. Außerdem benötigt diese Anlage weiterhin sehr viel Platz, was wiederum die Kosten erheblich vergrößert.

Die gegenständliche Erfindung stellt sich deshalb die Aufgabe, die Anzahl der erforderlichen Spannrahmen, sowie den erforderlichen Platzbedarf einer Bearbeitungsstation so weit wie möglich zu reduzieren, ohne an Flexibilität gegenüber bestehenden Lösungen zu verlieren.

Diese Aufgabe wird erfindungsgemäß durch eine Bearbeitungsstation nach Anspruch 1 und ein Verfahren zur Durchführung eines Typenwechsels nach Anspruch 16 gelöst.

Durch diese Ausführung wird nur mehr ein einziger Grundrahmen pro Seite benötigt, der je nach Bedarf unterschiedlich aufgebaut wird. Dazu sind spezielle Spannrahmensegmente vorgesehen, die erst bei Bedarf in den Grundrahmen eingesetzt werden. Ändert sich der Bauteil nur geringfügig, muss nicht mehr der gesamte Spannrahmen ausgewechselt werden, sondern nur mehr das betroffene Segment, was eine große Einsparung hinsichtlich der erforderlichen Anzahl der Spann-, Positionier- bzw. Bearbeitungseinrichtungen mit sich bringt, da nicht mehr eine Mehrzahl von Spannrahmen mit gleichen Einrichtungen ausgestattet sein muss. Die Segmentierung des Spannrahmens erhöht auch die Flexibiliät des Spannrahmens entscheidend, da dieser durch die Gestaltungsmöglichkeiten der Spannrahmensegmente sehr variabel aufgebaut werden kann.
Weiters entfällt ein platzaufwendiges, teures Spannrahmenmagazin, was die Kosten einer erfindungsgemäßen Bearbeitungsstation wesentlich senkt. Außerdem kann der Grundrahmen auch nach der Einführung eines neuen Bauteiltyps weiterverwendet werden, indem lediglich die Spannrahmensegmente abgeändert werden, was ebenfalls hilft, die Kosten zu reduzieren.
Der segmentierte Aufbau des Grundrahmens ermöglicht außerdem die Standardisierung des Grundrahmens und der Spannsegmente.
Damit lässt sich auch ein Typenwechsel in der Bearbeitungsstation sehr einfach und effektiv abwickeln, da anstellte von ganzen, zum Teil großen und schweren Spannrahmen nur mehr bestimmte Spannrahmensegmente ausgewechselt werden müssen.

Eine besonders flexible und besonders einfache Ausführungsvariante ergibt sich, wenn die Spannrahmensegmente mittels zumindest einer Handhabungseinrichtung, vorzugsweise ein Roboter, in die Grundrahmen eingesetzt werden.

Um ausreichend Platz zum Bestücken der Grundrahmen zu haben, ist es vorteilhaft, diese zum Einsetzen der Spannrahmensegmente in eine Einsetzposition zu verfahren und während dem Einsetzen der Spannrahmensegmente ortsfest zu halten. Damit schafft man gleichzeitig auch in der Bearbeitungsstation mehr Platz um eventuell notwendige Umrüstarbeiten durchzuführen.

Das Zuführen von Bauteilen in die Bearbeitungsstation wird wesentlich erleichtert, wenn die Grundrahmen zum Zuführen von Bauteilen in eine Zuführposition verfahrbar sind und nach dem Zuführen wieder in eine Arbeitsposition in der Bearbeitungsstation verfahrbar sind.

Ist darüber hinaus die Zuführposition gleich der Einsetzposition, kann die Bearbeitungsstation noch kompakter ausgeführt werden. Darüber hinaus verringern sich dadurch auch die Verfahrwege und natürlich die Verfahrzeiten, wodurch auch Taktzeit eingespart werden kann.

Die Bauteile können in der Bearbeitungsstation sehr sicher gespannt und positioniert werden, wenn die Grundrahmen während dem Fügevorgang in der Bearbeitungsstation ortsfest angeordnet sind.

Wenn in Reichweite der Handhabungseinrichtung zumindest ein Spannrahmensegmentmagazin, welches mehrere Spannrahmensegmente enthält, angeordnet ist, kann die Bearbeitungsstation besonders kompakt mit geringem Flächenbedarf ausgeführt werden, da unnötige Verfahrwege vermieden werden und eine stationäre Handhabungseinrichtung ausreicht, um alle benötigten Segmente zu erreichen. Dies wirkt sich wiederum sehr positiv auf die Kosten der Bearbeitungsstation aus.
Kann mit dem Spannrahmensegment ein Bauteil aufgegriffen werden und das Spannrahmensegment gemeinsam mit dem Bauteil mittels der Handhabungseinrichtung in den Grundrahmen eingesetzt werden, vereinfacht sich der Aufbau der Bearbeitungsstation noch weiter, da auch eine Bauteilzuführvorrichtung entfallen kann, was sich sowohl auf den erforderlichen Flächenbedarf, als auch auf die Kosten positiv auswirkt.

Die erfindungsgemäße Bearbeitungsstation kann ganz besonders effektiv betrieben werden, wenn mit der Handhabungseinrichtung nach dem Einsetzen der Spannrahmensegmente in die Grundrahmen Bearbeitungseinrichtungen greifbar sind und damit die Fahrzeugkarosserien bearbeitbar sind oder mit der Handhabungseinrichtung nach und/oder während dem Einsetzen der Spannrahmensegmente in die Grundrahmen Bauteile in die Bearbeitungsstation zuführbar sind, da dann die Handhabungseinrichtung durchgängig eingesetzt werden kann und es zu keinen Totzeiten kommt.

Der Aufbau der Bearbeitungsstation wird weiter vereinfacht, wenn die Spannrahmensegmente über den Grundrahmen mit Energie und notwendigen Medien versorgt werden. Dies ermöglicht einheitliche Kupplungen für Energie und andere Medien, was zu einer weiteren Standardisierung und Vereinfachung beiträgt. Außerdem reicht dann eine zentrale Energie- und Medienversorgung der Grundrahmens, beispielsweise über eine zentrale Kupplung, aus.

Eine ganz besonders vorteilhafte Ausführungsvariante ergibt sich, wenn die Bearbeitungseinrichtungen Schweißeinrichtungen, beispielsweise Laserschweiß-, Plasmaschweiß- oder Widerstandspunktschweißeinrichtungen, sind. Alternativ dazu können auch mechanische Fügeeinrichtungen, beispielsweise Stanzniet- oder Clincheinrichtungen, vorgesehen sein. Solche Schweißeinrichtungen bzw. Fügeeinrichtungen können sehr kompakt ausgeführt werden und lassen sich deshalb sehr vorteilhaft in die Spannrahmensegmente integrieren, wodurch die notwendige Kompaktheit der Spannrahmensegmente problemlos erreicht werden kann.
Für den Fall einer Laserschweißeinrichtung kann die gesamte Station darüber hinaus ohne großen Aufwand von der Umwelt abgekapselt werden, um die notwendigen Sicherheitsvorschriften zu erfüllen, da die gesamte erfindungsgemäße Station sehr kompakt gebaut werden kann.

Eine sehr vorteilhafte Verwendung einer erfindungsgemäßen Bearbeitungsstation findet sich in einer Karosseriefertigungsstraße, bestehend aus einer Mehrzahl solcher aufeinanderfolgender Bearbeitungsstationen, in der Fahrzeugkarosserien und/oder Untergruppen von Fahrzeugkarosserien geschweißt werden.

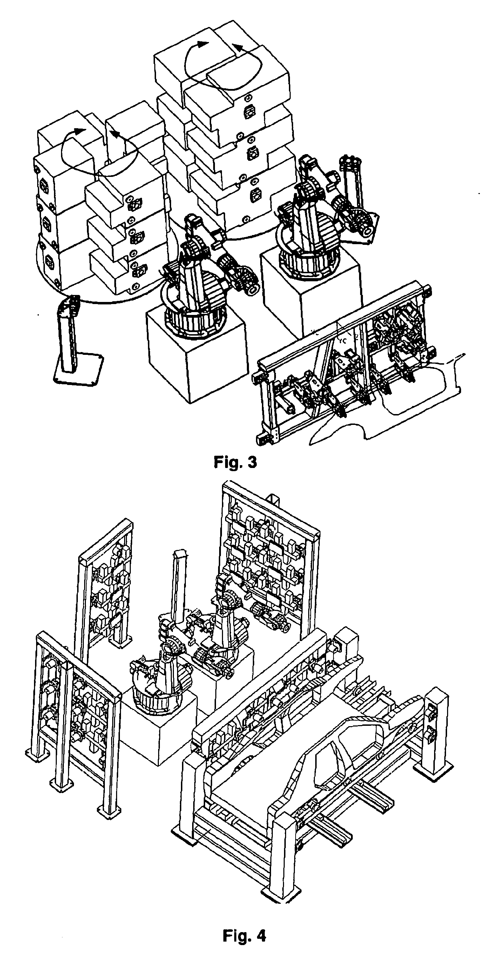

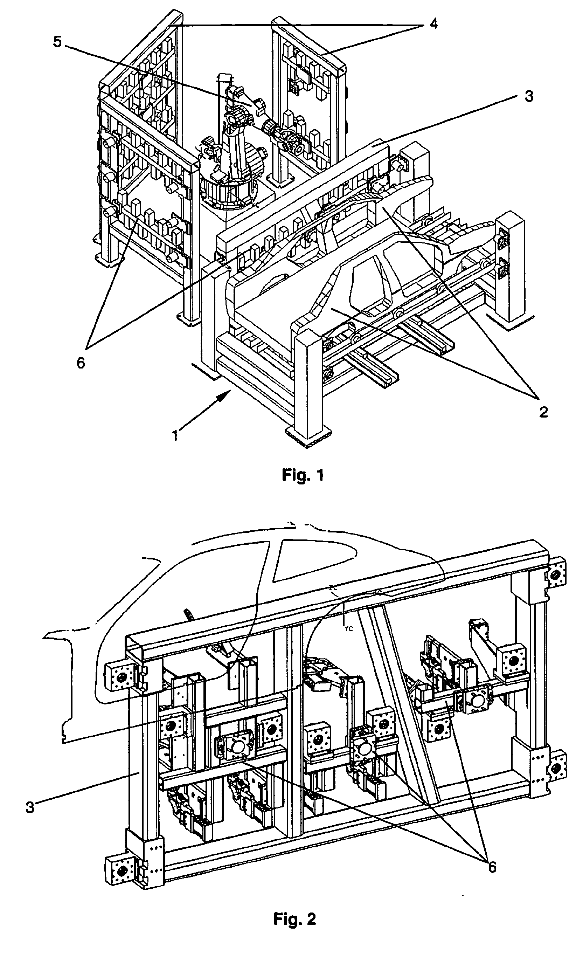

Die vorliegende Erfindung wird anhand der beispielhaften, nicht einschränkenden Figuren 1 und 2 beschrieben. Es zeigt
Fig. 1 eine dreidimensionale Ansicht einer erfindungsgemäßen Bearbeitungsstation
Fig. 2 eine Detailansicht eines segmentierten Spannrahmens,
Fig. 3 ein Ausführungsbeispiel mit Drehmagazinen und
Fig. 4 ein Ausführungsbeispiel mit zwei Bearbeitungsrobotern.

In Fig. 1 ist schematisch ein Teil einer Bearbeitungsstation 1 dargestellt. Zur besseren Übersicht, wird lediglich eine Hälfte der Bearbeitungsstation 1 gezeigt, wobei eine gleiche bzw. eine ähnliche Anordnung selbstverständlich auch auf der anderen Seite zu finden ist. An einer Seite in Längsrichtung der Bearbeitungsstation 1 ist in der Bearbeitungsstation 1 ein Grundrahmen 3 eines segmentierten Spannrahmens angeordnet. Dieser Grundrahmen 3 wird während während des Fügevorganges in der Bearbeitungsstation 1 ortfest gehalten. Zum Bestücken des Grundrahmens 3 mit Spannrahmensegmenten 6 kann der Grundrahmen aus der Bearbeitungsstation 1 in eine Einsetzposition verfahren werden, z.B. ein Meter quer zur Bearbeitungsstation 1, und außerhalb dieser bestückt werden. In diesem Ausführungsbeispiel wird der Spannrahmen nach dem Einsetzen der Spannrahmensegmente 6 in der Einsetzposition quer zur Bearbeitungsstation 1 zu den Säulen in der Bearbeitungsstation 1 in seine Arbeitsposition gefahren und gehalten, wobei gleichzeitig die zu fügenden Einzelteile in der Bearbeitungsstation 1 gespannt werden. Nachdem ein Bauteil gefügt wurde, wird der gesamte Spannrahmen, Grundrahmen 3 und Spannrahmensegmente 6, etwas aus der Bearbeitungsstation 1 in eine Zuführposition gefahren, z.B. ein Meter quer zur Bearbeitungsstation 1, um die problemlose Abfuhr des gefügten Bauteils, sowie die Zufuhr der zu fügenden Einzelteile zu erleichtern. Die Bearbeitung wird vereinfacht, wenn die Zuführposition gleich der Einsetzposition gewählt wird.

Der Grundrahmen 3 ist, wie in Fig. 2 besser ersichtlich, in mehrere Segmente unterteilt, hier in drei Segmente. In diese Segmente können verschiedene Spannrahmensegmente 6 eingesetzt werden, die beliebig ausgebildet sein können. Z.B. können auf den Spannrahmensegmenten 6 Positionier-, Spann- und/oder Bearbeitungseinrichtungen, wie beispielsweise Konsolen, Spanner (beispielsweise elektrische oder pneumatische Spanner) oder Schweißköpfe, angeordnet sein, die über den Grundrahmen 3 eventuell mit Energie oder anderen benötigten Medien, wie beispielsweise Wasser, Druckluft und Strom versorgt werden. Diese Spannrahmensegmente 6 werden mittels einer Handhabungseinrichtung, hier ein Roboter 5, aus Spannrahmensegmentmagazinen 4 entnommen und von diesem zum Grundrahmen 3 in der Bearbeitungsstation 1 befördert und in den Grundrahmen 3 eingesetzt. Dieser Vorgang wird solange wiederholt, bis der Spannrahmen komplett für den aktuellen zu bearbeitenden Fahrzeugtypen aufgebaut ist, also immer dann, wenn ein Typenwechsel durchgeführt wird. Nun wird ein zu bearbeitender Bauteil, oder auch mehrere, in die Bearbeitungsstation 1 zugeführt, von den einzelnen Spannrahmensegmenten 6 des Spannrahmens positioniert und gespannt und im Anschluss daran bearbeitet, wobei der Roboter 5 ebenfalls zur Bearbeitung herangezogen werden kann, wenn dieser z.B. nach dem Einsetzen der Spannrahmensegmente 6 ein Bearbeitungswerkzeug, wie beispielsweise eine Schweißzange, aufnimmt.
Eine andere Möglichkeit Bauteile zuzuführen besteht darin, dass ein Spannrahmensegment 6, z.B. das mittlere Segment, gleichzeitig auch als Bauteilgreifer ausgebildet ist, nach der Aufnahme des Spannrahmensegmentes 6 im Roboter 5 einen Bauteil 2 aufnimmt und gemeinsam mit dem Bauteil 2 in die Bearbeitungsstation 1 verfahren wird und dort in den Grundrahmen 3 eingesetzt wird. Dazu muss der Grundrahmen 3 natürlich bestimmten konstruktiven Voraussetzungen genügen, um die Zuführung von Spannrahmensegment 6 mit dem Bauteil 2 zu ermöglichen. Dazu kann der Spannrahmen beispielsweise oben offen sein um das Zufügen der Bauteile zu erleichtern.
Soll der Fahrzeugtyp geändert werden, z.B. von einem Coupé auf einen Kombi, muss nicht mehr der gesamte Spannrahmen ausgewechselt werden, sondern nur mehr einzelne Spannrahmensegmente 6.

Natürlich ist das in Fig. 1 und 2 gezeigte Ausführungsbeispiel nicht einschränkend. Viel mehr sind alle denkbaren Anordnungen möglich. Beispielsweise können andere Spannrahmensegmentmagazine 4, wie z.B. Drehmagazine wie in Fig. 3 gezeigt, oder mehr als ein Roboter 5, wie in Fig. 4 dargestellt, vorgesehen werden, die im Prinzip auch an jeder beliebigen Stelle der Bearbeitungsstation 1 platziert werden können.
Ebenso können andere geeignete Handhabungseinrichtungen als Roboter 5 vorgesehen werden.

Der Grundrahmen 3 wird während dem Fügevorgang fest mit der Bearbeitungsstation verbunden und wird nach der Bearbeitung, um die nächste Karosse einzuschleusen oder eine Typenwechsel vorzunehmen, von der Bearbeitungsstation 1 weggefahren.

## Patentansprüche

1. Bearbeitungsstation (1), vorzugsweise eine Schweißstation, zum Fügen von Konstruktionen aus Blechen, vorzugsweise Fahrzeugkarosserien, bestehend aus zumindest einem einer einzigen Seite der Konstruktion zugeordneten Spannrahmen, **dadurch gekennzeichnet, dass** der Spannrahmen als segmentierter Grundrahmen (3) ausgeführt ist, der in der Bearbeitungsstation angeordnet ist und zumindest ein Spannrahmensegment (6), das eine Mehrzahl von Spann- und/oder Positioniereinrichtungen und/oder zumindest eine Bearbeitungseinrichtung aufweist, lösbar am Grundrahmen (3) angeordnet ist, wobei zumindest ein weiteres, vom ersten verschiedenes Spannrahmensegment (6) vorgesehen ist, welches ebenfalls eine Mehrzahl von Spann- und/oder Positioniereinrichtungen und/oder eine Bearbeitungseinrichtung aufweist und welches statt dem ersten Spannrahmensegment (6) am Grundrahmen (3) lösbar anordenbar ist.

2. Bearbeitungsstation nach Anspruch 1, **dadurch gekennzeichnet, dass** eine Handhabungseinrichtung (5), vorzugsweise ein Roboter, vorgesehen ist, die zum Einsetzen der Spannrahmensegmente (6) in die Grundrahmen (3) ausgeführt ist.

3. Bearbeitungsstation nach Anspruch 1 oder 2, **dadurch gekennzeichnet, dass** die Grundrahmen (3) in der Bearbeitungsstation (1) zwischen einer Einsetzposition, einer Zuführposition und/oder einer Arbeitsposition verfahrbar angeordnet sind.

4. Bearbeitungsstation nach Anspruch 3, **dadurch gekennzeichnet, dass** der Grundrahmen (3) während dem Einsetzen der Spannrahmensegmente (6) in der Einsetzposition ortsfest angeordnet ist.

5. Bearbeitungsstation nach Anspruch 3 und 4, **dadurch gekennzeichnet, dass** die Zuführposition gleich der Einsetzposition ist.

6. Bearbeitungsstation nach einem der Ansprüche 1 bis 5, **dadurch gekennzeichnet, dass** die Grundrahmen (3) während dem Fügevorgang in der Bearbeitungsstation (1) ortsfest angeordnet sind.

7. Bearbeitungsstation nach einem der Ansprüche 2 bis 6, **dadurch gekennzeichnet, dass** in Reichweite der Handhabungseinrichtung (5) zumindest ein Spannrahmensegmentmagazin (4), welches eine Mehrzahl von Spannrahmensegmente (6) enthält, angeordnet ist.

8. Bearbeitungsstation nach einem der Ansprüche 2 bis 7, **dadurch gekennzeichnet, dass** ein Spannrahmensegment (6) mit einem Mittel zum Greifen eines Bauteiles (2) ausgeführt ist und das Spannrahmensegment (6) gemeinsam mit dem Bauteil (2) mittels der Handhabungseinrichtung (5) in den Grundrahmen (3) einsetzbar ist.

9. Bearbeitungsstation nach einem der Ansprüche 2 bis 8, **dadurch gekennzeichnet, dass** die Handhabungseinrichtung (5) zum Greifen von Bearbeitungseinrichtungen ausgeführt ist, mittels denen nach dem Einsetzen der Spannrahmensegmente (6) in die Grundrahmen (3) die Konstruktionen aus Blechen, vorzugsweise Fahrzeugkarosserien, bearbeitbar sind.

10. Bearbeitungsstation nach einem der Ansprüche 1 bis 9, **dadurch gekennzeichnet, dass** die Bearbeitungseinrichtungen Schweißeinrichtungen, beispielsweise Laserschweiß-, Plasmaschweiß- oder Widerstandspunktschweißeinrichtungen, sind.

11. Bearbeitungsstation nach einem der Ansprüche 1 bis 10, **dadurch gekennzeichnet, dass** die Bearbeitungseinrichtungen mechanische Fügeeinrichtungen, beispielsweise Stanzniet- oder Clincheinrichtungen, sind.

12. Bearbeitungsstation nach einem der Ansprüche 2 bis 11, **dadurch gekennzeichnet, dass** die Handhabungseinrichtung (5) zum Zuführen von Bauteilen (2) in die Bearbeitungsstation (1) nach und/oder während dem Einsetzen der Spannrahmensegmente (6) in die Grundrahmen (3) ausgeführt ist.

13. Bearbeitungsstation nach einem der Ansprüche 1 bis 12, **dadurch gekennzeichnet, dass** eine Energieversorgungeinrichtung zum Versorgen der Spannrahmensegmente (6) über den Grundrahmen (3) mit Energie und notwendigen Medien, wie beispielsweise Wasser, Strom, Druckluft oder Schweißgas, vorgesehen ist.

14. Karosseriefertigungsstraße bestehend aus einer Mehrzahl aufeinanderfolgender Bearbeitungsstationen (1) nach einem der Ansprüche 1 bis 13.

15. Karosseriefertigungsstraße nach Anspruch 14, **dadurch gekennzeichnet, dass** Fahrzeugkarosserien und/oder Untergruppen von Fahrzeugkarosserien fügbar sind.

16. Verfahren zur Durchführung eines Typenwechsels in einer Bearbeitungsstation (1), vorzugsweise eine Schweißstation, in welcher Konstruktionen aus Blechen, vorzugsweise Fahrzeugkarosserien, mit Hilfe zumindest eines einer einzigen Seite der Konstruktion zugeordneten, in der Bearbeitungsstation angeordneten Spannrahmens gefügt werden, welcher eine Mehrzahl von Spann- und/oder Positioniereinrichtungen und/oder zumindest eine Bearbeitungseinrichtung aufweist, **dadurch gekennzeichnet, dass** der segmentierte Spannrahmen durch Ersetzen zumindest eines einzelnen lösbaren Spannrahmensegmentes, welches jeweils eine Mehrzahl von Spann- und/oder Positioniereinrichtungen und/oder eine Bearbeitungseinrichtung aufweist, auf die neue Type umgerüstet wird.

17. Verfahren nach Anspruch 16, **dadurch gekennzeichnet, dass** der Spannrahmen mittels zumindest einer Handhabungseinrichtung (5), vorzugsweise ein Roboter, umgerüstet wird.

## Claims

1. A processing station (1), preferably a welding station for bonding constructions made of sheet metal, preferably vehicle bodies, consisting of at least one clamping frame being assigned to the single side of the construction, **characterized in that** the clamping frame is embodied as a segmented base frame (3), which is disposed in the processing station and **in that** at least one clamping frame segment (6) encompassing a plurality of clamping and/or positioning devices and/or at least one processing device is detachably disposed on the base frame (3), wherein at least a further clamping frame segment (6), which is different from the first clamping frame segment is provided, said further clamping frame segment (6) also encompassing a plurality of clamping and/or positioning devices and/or a processing device and being capable of being detachably disposed on the base frame (3) in place of the first clamping frame segment (6).

2. The processing station according to claim 1, **characterized in that** a handling device (5), preferably a robot, which is embodied for inserting the clamping frame segments (6) into the base frames (3), is provided.

3. The processing station according to claim 1 or 2, **characterized in that** the base frames (3) are disposed in the processing station (1) between an insertion position, a supply position and/or an operating position, so as to be capable of being displaced.

4. The processing station according to claim 3, **characterized in that** the base frame (3) is stationarily disposed in the insertion position during the insertion of the clamping frame segments (6).

5. The processing station according to claim 3 and 4, **characterized in that** the supply position is identical to the insertion position.

6. The processing station according to one of claims 1 to 5, **characterized in that** the base frames (3) are stationary disposed in the processing station (1) during the bonding process.

7. The processing station according to one of claims 2 to 6, **characterized in that** at least one clamping frame segment magazine (4), which comprises a plurality of clamping frame segments (6), is disposed within the range of the handling device (5).

8. The processing station according to one of claims 2 to 7, **characterized in that** a clamping frame segment (6) is embodied with a means for gripping a component (2) and the clamping frame segment (6) can be inserted into the base frame (3) together with the component (2) by means of the handling device (5).

9. The processing station according to one of claims 2 to 8, **characterized in that** the handling device (5) is embodied for gripping processing devices by means of which the constructions made of sheet metal, preferably vehicle bodies, can be processed after the insertion of the clamping frame segments (6) into the base frames (3).

10. The processing station according to one of claims 1 to 9, **characterized in that** the processing devices are welding devices, for example laser welding, plasma welding or resistance spot welding devices.

11. The processing station according to one of claims 1 to 10, **characterized in that** the processing devices are mechanical bonding devices, for example punch riveting or clinching devices.

12. The processing station according to one of claims 2 to 11, **characterized in that** the handling device (5) is embodied for supplying components (2) into the processing station (1) after and/or during the insertion of the clamping frame segments (6) into the base frames (3).

13. The processing station according to one of claims 1 to 12, **characterized in that** provision is made for an energy supply device to supply energy and essential media, such as water, power, compressed air or welding gas, for example, to the clamping frame segments (6) via the base frame (3).

14. A vehicle body production line consisting of a plurality of successive processing stations (1) according to one of claims 1 to 13.

15. The vehicle body production line according to claim 14, **characterized in that** vehicle bodies and/or subgroups of vehicle bodies are bondable.

16. A method for performing a type change in a processing station (1), preferably a welding station, in which constructions of sheet metals, preferably vehicle bodies, are bonded with the help of at least one clamping frame, which is assigned to the single side of the construction and disposed in the processing station, said clamping frame encompassing a plurality of clamping and/or positioning devices and/or at least one processing device, **characterized in that** the segmented clamping frame is retrofitted to the new type by insertion of at least one single detachable clamping frame segment, which, in each case, encompasses a plurality of clamping and/or positioning devices and/or a processing device.

17. The method according to claim 16, **characterized in that** the clamping frame is retrofitted by means of at least one handling device (5), preferably a robot. During the bonding process, the base frame 3 is fixedly connected with the processing station and is moved away from the processing station 1 after the processing in order to lock in the next vehicle body or to perform a type change.

## Revendications

1. Poste de travail (1), de préférence un poste de soudage, pour l'assemblage de constructions à base de tôles, de préférence des carrosseries automobiles, comprenant au moins un cadre de serrage associé à un côté unique de la construction, **caractérisé en ce que** le cadre de serrage est réalisé sous la forme d'un cadre de base (3) segmenté, qui est disposé dans le poste de travail, et au moins un segment de cadre de serrage (6), qui présente une pluralité de dispositifs de serrage et/ou de positionnement et/ou au moins un dispositif d'usinage, est disposé de façon amovible sur le cadre de base (3), au moins un autre segment de cadre de serrage (6) différent du premier étant prévu, lequel présente également une pluralité de dispositifs de serrage et/ou de positionnement et/ou un dispositif d'usinage et qui peut être disposé de façon amovible sur le cadre de base (3) au lieu du premier segment du cadre de serrage (6).

2. Poste de travail selon la revendication 1, **caractérisé en ce qu'**un dispositif de manipulation (5), de préférence un robot, est prévu, lequel est conçu pour l'insertion des segments du cadre de serrage (6) dans les cadres de base (3).

3. Poste de travail selon la revendication 1 ou 2, **caractérisé en ce que** les cadres de base (3) sont disposés dans le poste de travail (1) de façon à pouvoir se déplacer entre une position d'insertion, une position d'arrivée et/ou une position de travail.

4. Poste de travail selon la revendication 3, **caractérisé en ce que** le cadre de base (3) est disposé de façon fixe dans la position d'insertion pendant l'insertion de segments du cadre de serrage (6).

5. Poste de travail selon les revendications 3 et 4, **caractérisé en ce que** la position d'arrivée est identique la position d'insertion.

6. Poste de travail selon l'une quelconque des revendications 1 à 5, **caractérisé en ce que** les cadres de base (3) sont disposés de façon fixe dans le poste de travail (1) pendant l'opération d'assemblage.

7. Poste de travail selon l'une quelconque des revendications 2 à 6, **caractérisé en ce qu'**au moins un chargeur de segment du cadre de serrage (4), qui contient une pluralité de segments du cadre de serrage (6), est disposé à portée du dispositif de manipulation (5).

8. Poste de travail selon l'une quelconque des revendications 2 à 7, **caractérisé en ce qu'**un segment du cadre de serrage (6) est réalisé avec un moyen pour la préhension d'un composant (2) et le segment du cadre de serrage (6) peut être inséré conjointement avec le composant (2) au moyen du dispositif de manipulation (5) dans le cadre de base (3).

9. Poste de travail selon l'une quelconque des revendications 2 à 8, **caractérisé en ce que** le dispositif de manipulation (5) est conçu pour la préhension de dispositifs d'usinage, au moyen desquels les constructions à base de tôles, de préférence des carrosseries automobiles, peuvent être travaillées après insertion des segments du cadre de serrage (6) dans le cadre de base (3).

10. Poste de travail selon l'une quelconque des revendications 1 à 9, **caractérisé en ce que** les dispositifs d'usinage sont des dispositifs de soudage, par exemple des dispositifs de soudage au laser, de soudage au plasma ou des dispositifs de soudage par résistance par points.

11. Poste de travail selon l'une quelconque des revendications 1 à 10, **caractérisé en ce que** les dispositifs d'usinage sont des dispositifs d'assemblage mécaniques, par exemple des dispositifs à rivet de découpage ou des dispositifs à "clinch".

12. Poste de travail selon l'une quelconque des revendications 2 à 11, **caractérisé en ce que** le dispositif de manipulation (5) est conçu pour l'arrivée de composants (2) dans le poste de travail (1) après et/ou pendant l'insertion des segments du cadre de serrage (6) dans les cadres de base (3).

13. Poste de travail selon l'une quelconque des revendications 1 à 12, **caractérisé en ce qu'**un dispositif d'alimentation en énergie est prévu pour l'alimentation des segments du cadre de serrage (6) par l'intermédiaire du cadre de base (3) en énergie et agents nécessaires, comme par exemple eau, électricité, air comprimé ou gaz de soudage.

14. Chaîne de fabrication de carrosserie comprenant une pluralité de postes de travail (1) successifs selon l'une quelconque des revendications 1 à 13.

15. Chaîne de fabrication de carrosserie selon la revendication 14, **caractérisée en ce que** des carrosseries automobiles et/ou des sous-ensembles de carrosserie automobiles peuvent être assemblés.

16. Procédé pour mettre en oeuvre un changement de modèle dans un poste de travail (1), de préférence un poste de soudage, dans lequel des constructions à base de tôles, de préférence des carrosseries automobiles, sont assemblées à l'aide d'au moins un cadre de serrage attribué à un côté unique de la construction, lequel cadre présente une pluralité de dispositifs de serrage et/ou de positionnement et/ou au moins un dispositif d'usinage, **caractérisé en ce que** le cadre de serrage segmenté est modifié pour les nouveaux modèles par le remplacement d'au moins un segment amovible individuel du cadre de serrage, lequel présente à chaque fois une pluralité de dispositifs de serrage et/ou de positionnement et/ou un dispositif d'usinage.

17. Procédé selon la revendication 16, **caractérisé en ce que** le cadre de serrage est modifié au moyen d'au moins un dispositif de manipulation (5), de préférence un robot. Le cadre de base 3 est relié de façon fixe au poste d'usinage pendant l'opération d'assemblage et est évacué du poste de travail 1 après l'usinage, afin de faire entrer la prochaine carrosserie ou d'effectuer un changement de modèle.
